(19)

Europäisches Patentamt

European Patent Office

Office européen des brevets

(11) **EP 1 870 385 A1**

(12) **EUROPEAN PATENT APPLICATION**

published in accordance with Art. 153(4) EPC

(43) Date of publication:
**26.12.2007  Bulletin 2007/52**

(21) Application number: **06730201.8**

(22) Date of filing: **28.03.2006**

(51) Int Cl.:
*C03C 4/08* (2006.01)      *C03C 3/091* (2006.01)
*H01J 61/30* (2006.01)

(86) International application number:
**PCT/JP2006/306253**

(87) International publication number:
**WO 2006/106660 (12.10.2006 Gazette 2006/41)**

(84) Designated Contracting States:
**DE**

(30) Priority:  **01.04.2005  JP  2005106023**

(71) Applicant: **MATSUSHITA ELECTRIC INDUSTRIAL CO., LTD.**
**Osaka 571-8501 (JP)**

(72) Inventors:
• **NIGUMA, Yasurou**
**c/o Matsushita Electr. Indust. Co.,Ltd**
**2-1-61 Shiromi, Chuo-ku**
**Osaka 540-6207 (JP)**

• **MOTOYA, Atsushi**
**c/o Matsushita Electr. Indust. Co.,Ltd**
**2-1-61 Shiromi, Chuo-ku**
**Osaka 540-6207 (JP)**

(74) Representative: **Eisenführ, Speiser & Partner**
**Patentanwälte Rechtsanwälte**
**Postfach 10 60 78**
**28060 Bremen (DE)**

(54) **GLASS COMPOSITION FOR LAMP, LAMP, BACKLIGHT UNIT AND METHOD FOR PRODUCING GLASS COMPOSITION FOR LAMP**

(57)    Disclosed is a glass composition for lamps which contains Mo ions as a component, substantially comprising the following that are expressed in terms of oxides: $SiO_2$ : 55 to 75 wt%, $B_2O_3$ : 11 to 25 wt%, $MoO_3$ : 0.3 to 1.4 wt%, $Al_2O_3$ : 1 to 10 wt%, $Li_2O$ : 0 to 10 wt%, $Na_2O$ : 0 to 10 wt%, $K_2O$ : 0 to 10 wt%, $Li_2O + Na_2O + K_2O$: 1 to 10 wt%, MgO : 0 to 5 wt%, CaO : 0 to 10 wt%, SrO : 0 to 10 wt%, BaO : 0 to 10 wt%, MgO + CaO + SrO + BaO: 1 to 10 wt%. By having such a constitution, the glass composition has a high ultraviolet shielding effect and hardly suffers from coloring.

FIG.1

| OXIDE WT% | CONVENTIONAL EXAMPLE | | COMPARATIVE EXAMPLE | | EMBODIMENT | | | | |
|---|---|---|---|---|---|---|---|---|---|
| | No.1 | No.2 | No.1 | No.2 | No.1 | No.2 | No.3 | No.4 | No.5 |
| $SiO_2$ | 69.3 | 71.3 | 70.2 | 68.5 | 68.8 | 70.0 | 70.4 | 70.8 | 69.6 |
| $B_2O_3$ | 15.5 | 15.3 | 16.0 | 15.3 | 17.2 | 15.4 | 15.5 | 15.8 | 15.6 |
| $Al_2O_3$ | 5.1 | 1.4 | 4.8 | 5.1 | 3.1 | 6.7 | 5.2 | 5.2 | 5.1 |
| $Li_2O$ | 0.5 | | | | | | 0.5 | | |
| $Na_2O$ | 1.4 | 3.8 | 5.6 | 4.5 | 6.2 | 5.6 | 4.0 | 5.6 | 5.5 |
| $K_2O$ | 4.8 | 1.7 | 0.8 | 1.5 | | | 1.5 | | |
| MgO | 0.5 | 0.5 | | 0.8 | | | 1.0 | 1.5 | 0.2 |
| CaO | 0.9 | 0.9 | 1.8 | | 4.4 | 2.0 | 0.8 | | 0.9 |
| SrO | | | | 0.6 | | | | | 1.6 |
| BaO | 1.2 | | | 2.4 | | | | | |
| $Sb_2O_3$ | 0.1 | | | | | | | | |
| $As_2O_3$ | | 0.1 | | | | | | | |
| $TiO_2$ | 0.6 | 5.0 | | | | | | | |
| ZrO | 0.1 | | | 0.1 | | | | | 0.1 |
| $MoO_3$ | | | 0.2 | 1.8 | 0.3 | 0.3 | 1.1 | 1.1 | 1.4 |
| ZnO | | | | | | | | | |
| OXIDANT | — | — | 0.1 | 1.1 | 1.0 | 0.1 | 0.3 | 5.6 | 0.7 |
| $MoO_3$/OXIDANT | — | — | 0.50 | 0.61 | 3.33 | 0.33 | 0.27 | 5.09 | 0.50 |
| ULTRAVIOLET TRANSMITTANCE | | | | | | | | | |
| 254nm:$T_{254}$ | 0.4% | 0.2% | 13.8% | 0.1% | 0.1% | 0.1% | 0.1% | 0.1% | 0.1% |
| 313nm:$T_{313}$ | 38.0% | 1.0% | 85.4% | 1.1% | 51.5% | 36.9% | 3.1% | 4.3% | 2.4% |
| ULTRAVIOLET SHIELDING | ○ | ◎ | × | ◎ | ○ | ○ | ◎ | ◎ | ◎ |
| VISIBLE LIGHT TRANSMITTANCE | | | | | | | | | |
| 400nm:$T_{400}$ | 88.8% | 79.9% | 92.1% | 74.1% | 90.9% | 82.1% | 80.2% | 89.9% | 87.4% |
| 550nm:$T_{550}$ | 91.5% | 90.8% | 93.2% | 89.1% | 91.3% | 89.3% | 87.8% | 92.4% | 90.4% |
| $T_{400}/T_{550}$ | 0.97 | 0.88 | 0.99 | 0.83 | 1.00 | 0.92 | 0.91 | 0.97 | 0.97 |
| COLORING | ◎ | × | ◎ | × | ◎ | ○ | ○ | ◎ | ◎ |
| THERMAL EXPANSION COEFFICIENT $\alpha_{30-380}(\times 10^{-7})$ | — | — | 42 | 43 | 37 | 42 | 46 | 40 | 42 |
| DEVITRIFICATION | × | × | ○ | ○ | ○ | ○ | ○ | ○ | ○ |

Printed by Jouve, 75001 PARIS (FR)

EP 1 870 385 A1

## Description

## Technical Field

The present invention relates to a glass composition for lamps, a lamp, a backlight unit, and a method for producing the glass composition for lamps.

## Background Art

For a backlight such as a liquid crystal display device, a lamp is used as a light source. In order to reduce a thickness and a weight of a backlight, it is preferable that a glass bulb of the lamp is formed so as to have a small diameter and a thin wall. Therefore, the glass bulb is generally formed by borosilicate acid glass.

The borosilicate acid glass is better in heat resistance than soda-lime glass because the borosilicate acid glass has a higher softening point, a higher anneal temperature, and a small coefficient of thermal expansion. Therefore, the glass bulb hardly suffers from thermal deformation under a high temperature condition in a phosphor film calcination process, even if being formed so as to have a small diameter and a thin wall. Also, the borosilicate acid glass is better in mechanical strength because the borosilicate acid glass has a higher Young's modulus and a higher Vickers hardness.

Therefore, the glass bulb is hardly broken even if being formed so as to have a small diameter and a thin wall.

Note that borosilicate acid glass in the present invention means glass containing 11wt% or more $B_2O_3$ in terms of the oxides.

By the way, glass for lamps is required to have an ultravioletshieldingeffect and an anti-solarization effect. The ultraviolet shielding effect suppresses that an ultraviolet ray generated in a lamp transmits to an outside of the lamp, and the anti-solarization effect suppresses coloringof glass caused by an ultraviolet ray (solarization). On the other hand, in Patent Documents 1, 2, and 3, the following borosilicate acid glass is disclosed. The ultraviolet shielding effect and the anti-solarization effect are given to the borosilicate acid glass by adding an ultraviolet shielding agent such as $TiO_2$.

Patent Document 1: Japanese Published Patent Application No. H09-77529

Patent Document 2: Japanese Published Patent Application No. 2001-220175

Patent Document 3: Japanese Published Patent Application No. 2002-60240

## Disclosure of the Invention

## Problems the Invention is going to Solve

However, if adding an ultraviolet shielding agent such as $TiO_2$ to borosilicate acid glass, a lamp luminous flux decreases because glass is colored and visible light is shielded. On the other hand, if decreasing an additive amount of an ultraviolet shielding agent to prevent glass from being colored, the ultraviolet shielding effect becomes insufficient. The present invention aims toprovide a glass composition for lamps that has a high ultraviolet shielding effect and hardly suffers from coloring, and a method for producing the glass composition. Also, the present invention further aims to provide a lamp that is high in lamp luminous flux.

## Means of Solving the Problems

To achieve the above objectives, the glass composition for lamps of the present invention is a glass composition for lamps which contains Mo ions as a component, substantially comprising the following that are expressed in terms of oxides: $SiO_2$: 55 to 75 wt%; $B_2O_3$: 11 to 25 wt%; $MoO_3$: 0.3 to 1.4 wt%; $Al_2O_3$: 1 to 10 wt%; $Li_2O$: 0 to 10 wt%; $Na_2O$: 0 to 10 wt%; $K_2O$: 0 to 10 wt%; $Li_2O + Na_2O + K_2O$: 1 to 10 wt%; MgO: 0 to 5 wt%; CaO: 0 to 10 wt%; SrO: 0 to 10 wt%; BaO: 0 to 10 wt%; and MgO + CaO + SrO + BaO: 1 to 10 wt%, wherein a cation percentage of $Mo^{6+}$ and $Mo^{Other}$ of the Mo ions satisfies the following relation: $(Mo^{6+})/[(Mo^{6+}) + (Mo^{Other})] \geq 0.8$. Note that $Mo^{Other}$ is Mo ion other than hexavalent Mo ion.

In accordance with an aspect of the glass composition for lamps of the present invention, the glass composition has an oxidization property in a molten state.

In accordance with another aspect of the glass composition for lamps of the present invention, the glass composition contains 1.1 wt% or more $MoO_3$ in terms of oxides.

In accordance with another aspect of the glass composition for lamps of the present invention, a thermal expansion coefficient $\alpha_{30/380}$ is in a range of $34 \times 10^{-7}/K$ to $43 \times 10^{-7}/K$ inclusive.

In accordance with another aspect of the glass composition for lamps of the present invention, a thermal expansion coefficient $\alpha_{30/380}$ is in a range of $43 \times 10^{-7}/K$ to $55 \times 10^{-7}/K$ inclusive.

The lamp of the present invention includes a glass bulb that is made of the above-mentioned glass composition.

The above-mentioned lamp is disposed on the backlight unit of the present invention.

In accordance with an aspect of the backlight unit of the present invention, the backlight unit comprises a plurality of the above-mentioned lamps, and a diffusion plate made from a polycarbonate resin disposed on a light-emission side of the plurality of lamps.

The method for producing the glass composition for lamps of the present invention comprises a mixing step of mixing glass materials so that the glass composition substantially contains the following that are expressed in terms of oxides: $SiO_2$: 55 to 75 wt%; $B_2O_3$: 11 to 25 wt%; $MoO_3$: 0.3 to 1.4 wt%; $Al_2O_3$: 1 to 10 wt%; $Li_2O$: 0 to 10 wt%; $Na_2O$: 0 to 10 wt%; $K_2O$: 0 to 10 wt%; $Li_2O + Na_2O + K_2O$: 1 to 10 wt%; MgO: 0 to 5 wt%; CaO: 0 to 10 wt%; SrO: 0 to 10 wt%; BaO: 0 to 10 wt%; and MgO + CaO + SrO + BaO: 1 to 10 wt%; and a melting step of melting the mixed glass materials to make the glass composition in a molten state, wherein the glass materials in the molten state are oxidized in the melting step.

In accordance with an aspect of the method for producing the glass composition for lamps of the present invention, a part of the glass materials mixed in the mixing step is alkali metal nitrate, and the glass materials in the molten state are oxidized in the melting step by melting the alkali metal nitrate.

In accordance with another aspect of the method for producing the glass composition for lamps of the present invention, the alkali metal nitrate is either $NaNO_3$ or $KNO_3$, or both $NaNO_3$ and $KNO_3$.

**Effects of the Invention**

$MoO_3$ in the range of 0.3 to 1.4 wt%, in terms of the oxides, is added to the glass composition for lamps of the present invention, and the cation percentage of $Mo^{6+}$ and $Mo^{Other}$ of the Mo ions in the glass composition satisfies the relation of:$(Mo^{6+})/[(Mo^{6+}) + (Mo^{Other})] \geq 0.8$. Therefore, the glass composition has a sufficient ultraviolet shielding effect and a sufficient anti-solarization effect, and coloring is less likely to occur.

After having conducted various investigations, the inventors of the present invention ascertained that $Mo^{6+}$ does not cause coloring of glass, but $Mo^{Other}$ causes coloring of glass. Also, the inventors found out that if $Mo^{Other}$ is small in amount, coloring is less likely to occur, and especially if the cation percentage of $Mo^{6+}$ and $Mo^{Other}$ satisfies the above-mentioned relation, it is highly unlikely that coloring of glass occurs.

If the glass composition for lamps of the present invention is oxidized in a molten state, $Mo^{Other}$ is small in amount, and coloring is less likely to occur.

Also, if the glass composition for lamps of the present invention contains 1.1 wt% or more $MoO_3$, in terms of the oxides, the following effects can be obtained.

Generally, diffusion plates made from an acrylic resin are used for backlight units for liquid crystal TVs. However, the diffusion plates are easily warped by absorbing moisture, causing an error of measurements as they get larger. Therefore, diffusion plates made from a PC (polycarbonate) resin which warp less are used for backlight units for large liquid crystal display TVs with the size of the displays larger than 17 inches.

The diffusion plates made from the PC resin, however, are discolored and deteriorated by a 313nm ultraviolet ray severely, compared to the diffusion plates made from the acrylic resin. A conventional glass for lamps can sufficiently shield a 186 nm and a 254 nm ultraviolet ray out of ultraviolet rays emitted from mercury, but cannot shield a 313 nm ultraviolet ray sufficiently. Therefore, because of a 313 nm ultraviolet ray transmitted and leaked from a lamp, diffusion plates and diffusion sheets made from the PC resin are discolored and deteriorated, deteriorating the luminance of backlight units.

Therefore, an idea of adding $WO_3$ and $TiO_2$, for example, to the glass to suppress the transmission of a 313 nm ultraviolet ray can be considered. However, since $WO_3$ and $TiO_2$ have a property of increasing crystallization of the glass, the glass can cause a devitrification (a phenomenon of losing transparency) in melting or in a heating process during lamp production.

On the other hand, when 1.1 wt% or more $MoO_3$, in terms of the oxides, is added to the glass composition of the present invention, it is possible to suppress the transmission of a 313 nm ultraviolet ray sufficiently with small discoloration/deterioration of resin components. In addition, the resin components have no devitrification and substantially no coloring.

The glass composition for lamps of the present invention achieves the following effects when the coefficient of thermal expansion ($\alpha_{30/380}$) is $34 \times 10^{-7}$/K to $43 \times 10^{-7}$/K or $43 \times 10^{-7}$/K to $55 \times 10^{-7}$/K.

Generally, a lead wire made of tungsten or kovar alloy, which is capable of resisting the heat caused by a discharge, is used for a lamp for a backlight. Consequently, it is preferable to bring the coefficient of thermal expansion of glass close to that of tungsten and kovar alloy, in order to increase the reliability of airtight sealing of the lead wire.

In the case of the coefficient of thermal expansion ($\alpha_{30/380}$) of the glass composition being $34 \times 10^{-7}$/K to $43 \times 10^{-7}$/K, the coefficient of thermal expansion of the glass composition is same as that of the lead wire made of tungsten. Therefore, owing to the high chemical resistance, the reliability of airtight sealing of the lead wire is high.

When the coefficient of thermal expansion ($\alpha_{30/380}$) of the glass composition is $43 \Delta 10^{-7}$/K to $55 \times 10^{-7}$/K, the coefficient of thermal expansion of the glass composition is same as that of the lead wire made of kovar alloy. Therefore, owing to the high chemical resistance, the reliability of airtight sealing of the lead wire is high.

The lamp of the present invention includes a glass bulb made of the above glass composition. Therefore, the glass of the glass bulb has little coloring and a visible light transmittance is high so that the lamp luminous flux is high. Since the backlight unit of the present invention is provided with the above lamp with high lamp luminous flux, the luminance is high.

Also, when the lamp including the glass bulb made of the glass composition to which 1.1 wt% or more $MoO_3$ is added is provided with the backlight unit of the present invention, the deterioration and discoloration of a diffusion plate 14 and a diffusion sheet 15 caused by a 313 nm ultraviolet ray are effectively suppressed. Consequently, the decrease in the surface luminance caused by the use of a backlight unit is suppressed remarkably, so that a backlight unit 10 has a long life.

A high-vision technology for liquid crystal display TVs has been evolving in recent years. High-vision liquid crystal display TVs have a smaller opening ratio and require a higher surface luminance than normal liquid crystal display TVs. Therefore, the surface luminance of a backlight unit has been boosted by increasing the number of cold cathode fluorescent lamps, for example. Raising the surface luminance of the backlight unit in this way leads to an increase in the amount of a 313 nm ultraviolet ray, which severely deteriorates and discolors the diffusion and reflection plates, and conversely causes a drop in the surface luminance of the backlight unit. However, such drop in the surface luminance of the backlight unit of the present invention hardly occurs.

Furthermore, there have been increasing demands in recent years for longer life liquid crystal display TVs, an example of which is the call for liquid crystal display TVs having an operating time in excess of 60,000 hours. Since the decrease in the surface luminance of the backlight unit of the present invention hardly occurs, it is possible to extend the life of the liquid crystal display TVs.

Also, when the glass composition constituting the glass bulb contains 1.1 wt% or more $MoO_3$, in terms of the oxides, the transmission of a 313 nm ultraviolet ray generated by mercury can be suppressed sufficiently. Therefore, even if the glass composition is used for a backlight unit, the discoloration and deterioration of resin components are little and the reliability of the backlights is high.

According to the method for producing the glass composition for lamps of the present invention, the glass composition in a molten state is oxidized in a melting process. Therefore, it is possible to suppress coloring of the above glass composition more effectively. In other words, if the glass composition in the molten state is oxidized in the melting process, a valence change of Mo ion (hereinafter, referred to as "valence change") such as a case in which $Mo^{6+}$ is deoxidized to $Mo^{Other}$ can be efficiently suppressed. As a result, $Mo^{Other}$ is small in amount and the glass has little coloring.

Especially, if the glass composition in the molten state is oxidized by using alkali metal nitrate for a part of a glass material, the glass composition for lamps of the present invention can be produced by the same production process as the conventional technology, without adding new processes.

Moreover, if either $NaNO_3$ or $KNO_3$, or both $NaNO_3$ and $KNO_3$ are used as the alkali metal nitrate, the glass composition can be produced at relatively low cost.

## Brief Description of the Drawings

FIG. 1 shows a composition and a property of a glass composition of an embodiment of the present invention.
FIG. 2 is a schematic view showing an essential structure of a cold cathode fluorescent lamp of an embodiment of the present invention.
FIG. 3 is a schematic view showing an essential structure of a backlight unit of an embodiment of the present invention.

## Description of Reference Numerals

    1: lamp
    2: glass bulb
    10: backlight unit
    14: diffusion plate

## Best Mode for Carrying out the Invention

A glass composition for lamps, a lamp, a backlight unit, and a method for producing the glass composition for lamps are described with reference to the accompanying drawings.

<Description of the glass composition for lamps>

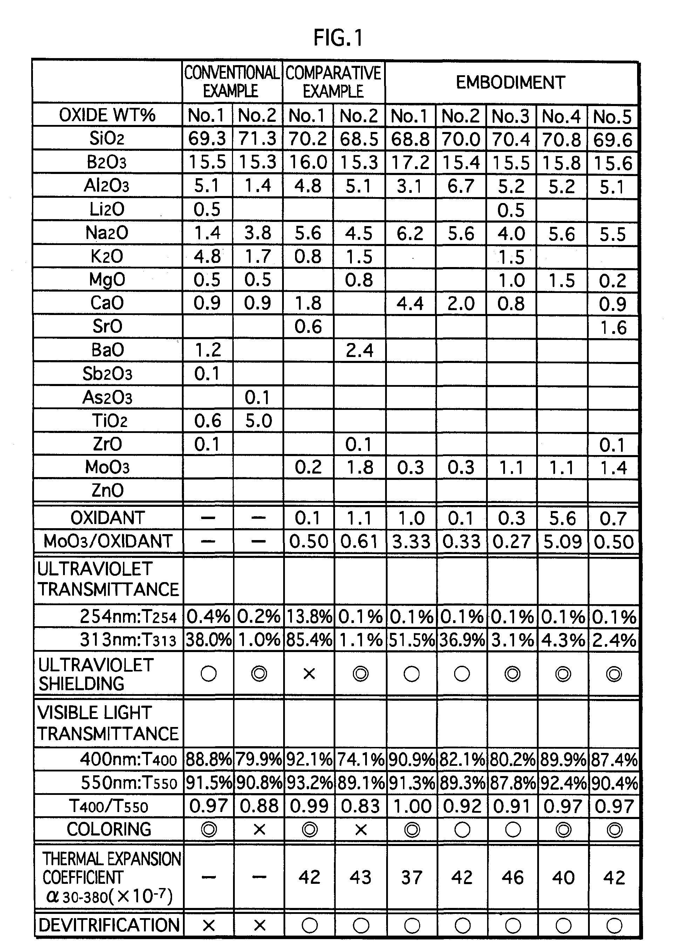

The constituents of the glass composition of the present invention, in terms of oxides, are shown in No.1 to 5 in FIG.1.

Here, the constituents of the glass composition of the present invention are not limited to the constituents shown in No.1 to 5. However, in order to maintain a property as glass for lamps, it is preferable that the glass composition of the present invention consists substantially of the following constituents expressed in terms of oxides: $SiO_2$: 55 to 75 wt%, $B_2O_3$: 11 to 25 wt%, $MoO_3$: 0.3 to 1.4 wt%, $Al_2O_3$: 1 to 10 wt%, $Li_2O$: 0 to 10 wt%, $Na_2O$: 0 to 10 wt%, $K_2O$: 0 to 10 wt%, $Li_2O + Na_2O + K_2O$: 1 to 10 wt%, $MgO$: 0 to 5 wt%, $CaO$: 0 to 10 wt%, $SrO$: 0 to 10 wt%, $BaO$: 0 to 10 wt%, $MgO + CaO + SrO + BaO$: 1 to 10 wt%.

$SiO_2$ is a main component for forming a mesh structure of the glass, and a content thereof is in a range of 55 to 75 wt% inclusive. When $SiO_2$ is less than 55 wt%, the chemical resistance of the glass becomes insufficient, and the coefficient of thermal expansion becomes too large. As a result, airtight sealing of the lead wire becomes difficult. On the other hand, when $SiO_2$ is more than 75 wt%, the glass viscosity becomes too high, making melting and forming of the glass difficult. Moreover, the coefficient of thermal expansion becomes too small, making airtight sealing of the lead wire difficult.

$B_2O_3$ is a component for forming a mesh structure of the glass, and a content thereof is in a range of 11 to 25 wt% inclusive. If $B_2O_3$ is added, a glass easy-to-melt property and the chemical resistance can be improved, and the coefficient of thermal expansion becomes small. When $B_2O_3$ is less than 11 wt%, the chemical resistance becomes insufficient, along with deteriorating the glass easy-to-melt property. Also, the coefficient of thermal expansion becomes too large, making airtight sealing of the lead wire difficult. On the other hand, when $B_2O_3$ is more than 25 wt%, an evaporation amount of a glass component increases in a melting process, and it is difficult to obtain uniform glass. Moreover, the coefficient of thermal expansion becomes too small, making airtight sealing of the lead wire difficult.

$MoO_3$ is an essential component of the glass composition of the present invention, and gives the glass a high ultraviolet shielding effect and a high anti-solarization effect. When 0.3wt% or more $MoO_3$ is added, a 186 nm and a 254 nm ultraviolet rays can be sufficiently shielded. Especially when 1.1 wt% or more $MoO_3$ is added, even a 313 nm ultraviolet ray can be sufficiently shielded.

Note that Mo ion gives the glass the ultraviolet shielding effect and the anti-solarization effect even if Mo ion is contained in each state of Mo ion from divalent Mo ion to hexavalent Mo ion. However, the glass does not cause coloring because of $Mo^{6+}$. Regarding the glass composition of the present invention, melted glass is oxidized when melting a glass material. Therefore, a valence change of Mo ion in the melted glass is suppressed, and a state of $Mo^{6+}$ is maintained.

When $MoO_3$ is less than 0.3 wt%, the ultraviolet shielding effect becomes insufficient. On the other hand, when $MoO_3$ is more than 1.4 wt%, the glass is likely to be colored to brown. This is because if an amount $Mo^{other}$ ion increases along with an increase of a whole amount of Mo ion, it becomes difficult to suppress coloring only by suppressing a valence change of Mo ion.

$Al_2O_3$ is a component for forming a mesh structure of the glass, and a content thereof is in a range of 1 to 10 wt% inclusive. If $Al_2O_3$ is added, the chemical resistance of the glass can be improved. When $Al_2O_3$ is less than 1 wt%, the chemical resistance becomes insufficient. On the other hand, when $Al_2O_3$ is more than 10 wt%, the glass viscosity becomes too high, making melting and forming of the glass difficult. Moreover, the coefficient of thermal expansion becomes too large, making airtight sealing of the lead wire difficult.

$Na_2O$, $K_2O$, and $Li_2O$ which are alkaline metal oxides are components for giving a function to a mash structure of the glass. When these alkaline metal oxides are added, the viscosity of the glass decreases, making melting and forming of glass easy. Also, the coefficient of thermal expansion of the glass becomes large.

A content of $Li_2O$ is in a range of 0 to 5 wt% inclusive, a content of $Na_2O$ is in a range of 0 to 8 wt% inclusive, and a content of $K_2O$ is in a range of 0 to 12 wt% inclusive. The total content of $Na_2O$, $K_2O$, and $Li_2O$ is in a range of 1 to 10 wt% inclusive. When the total content is less than 1 wt%, the viscosity of the glass becomes too high, making melting and forming of the glass difficult. On the other hand, when the total content is more than 10 wt%, alkaline metal ion is eluted from the glass to a glass surface, resulting in the decrease in chemical resistance. Moreover, the coefficient of thermal expansion becomes too large, making airtight sealing of the lead wire difficult.

In order to maintain a valence of Mo ion in the glass at $Mo^{6+}$, a part of the alkaline metal oxides is added in a formof nitrate as an oxidant. It is preferable that an additive amount of alkaline metal nitrate as an oxidant is equal to or larger than 0.5 times as large as an additive amount of $MoO_3$ in weight percentage.

$MgO$, $CaO$, $SrO$, and $BaO$ which are alkaline earth metal oxides are components for giving a function to a mash structure of the glass. If these alkaline earth metal oxides are added, the viscosity of the glass decreases, making melting and forming of the glass easy. Also, the coefficient of thermal expansion of the glass becomes large.

A content of $MgO$ is in a range of 0 to 5 wt% inclusive, a content of $CaO$ is in a range of 0 to 10 wt% inclusive, a content of $SrO$ is in a range of 0 to 10 wt% inclusive, and a content of $BaO$ is in a range of 0 to 10 wt% inclusive. The total content of MgO, CaO, SrO, and BaO is in a range of 1 to 10 wt% inclusive. When the total content is less than 1 wt%, the viscosity of the glass becomes too high, makingmelting and forming of the glass difficult. Also, a chemical resistance of the glass decreases. On the other hand, when the total content is more than 10 wt%, the coefficient of thermal expansion becomes too large, making airtight sealing of the lead wire difficult.

Here, the glass composition of present invention may include a metal oxide other than those described above as long as the contents of each component are substantially within the above described range and the scope of the above constituents. Examples of a metal oxide include $Sb_2O_3$, ZnO, ZrO, $P_2O_5$, $TiO_2$, PbO, $As_2O_3$ and the like.

Note that $TiO_2$ increases the crystalline of the glass, causing a devitrification. Therefore, it is preferable that $TiO_2$ is not contained except for a case in which $TiO_2$ is mixed as impurities of a glass material. Also, PbO and $As_2O_3$ are materials which add a load to an environment, and increase a material cost because of a high cost. Therefore, it is preferable that PbO and $As_2O_3$ are not contained except for a case in which PbO and $As_2O_3$ are mixed as impurities of a glass material.

<Description of the method for producing the glass composition for lamps>

The method for producing the glass composition of the present invention is described in the following.

Firstly, in a mixing process, a plurality of types of glass materials are mixed so that the glass after melting is within the range of the glass composition of the present invention. Next, in a melting process, the mixed glass materials are thrown into a glass melting furnace, and melted at a temperature in a range of 1500˚c to 1600 ˚c inclusive for vitrification, in order to obtain glass melting liquid.

In the mixing process, alkali metal nitrate is mixed as a part of the glass materials. Since alkali metal nitrate serves as an oxidant in the glass melting liquid in the melting process, the glass melting liquid become oxidized, and the valence change of Mo is suppressed. As alkali metal nitrate, $NaNO_3$ and $KNO_3$ can be used. Either $NaNO_3$ or $KNO_3$, or both $NaNO_3$ and $KNO_3$ can be used.

Note that the method of oxidizing the glass melting liquid is not limited to the method of using alkali metal nitrate, and the glass melting liquid may be oxidized by adding other compound as an oxidant. Also, alkali metal nitrate is not limited to $NaNO_3$ and $KNO_3$, and other alkali metal nitrate may be used.

It is preferable that an additive amount of an oxidant such as alkali metal nitrate is equal to or larger than 0.5 times as large as an additive amount of $MoO_3$, in weight percentage. If the additive amount of the oxidant is less than 0.5 times as large as the additive amount of $MoO_3$, there is a possibility that the glass melting liquid is not sufficiently oxidized, and the valence change of Mo ion cannot be sufficiently suppressed.

After the melting process, the melting glass liquid is formed into a tube using a tube drawing method such as a Danner method and the like, and then cut into a tube having the predetermined size to manufacture a glass tube for lamps. In addition, the glass tube is heat-processed to manufacture a glass bulb. Then various types of lamps are manufactured.

In the present invention, the following are defined as the glass composition in the molten state. One is glass melting liquid which is formed from the glass material melted in the furnace, and the other is the glass composition in the molten state which has been cooled once to be the glass composition and then has been melted again by heating.

(About Lamps)

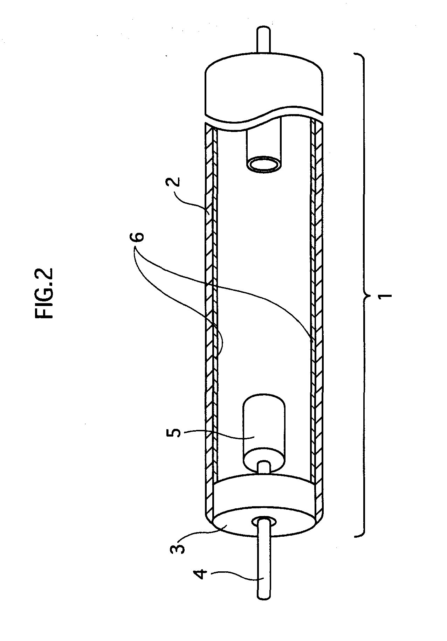

A straight tube-shaped cold cathode fluorescent lamp is described as one embodiment of the lamp of the present invention with reference to the accompanying drawings. FIG. 2 is the schematic view showing the essential structure of a cold cathode fluorescent lamp 1 of one embodiment of the present invention. The structure of the cold cathode fluorescent lamp 1 basically corresponds to that of a conventional cold cathode fluorescent lamp.

A glass bulb 2 of the cold cathode fluorescent lamp 1 is made of the above glass composition, and its outer diameter, inner diameter and total length are approximately 4.0 mm, approximately 3.4 mm and approximately 730 mm respectively. The glass bulb 2 is manufactured by taking the following steps. Firstly, materials that are mixed to be predetermined constituents are thrown to the glass melting furnace and melted at a temperature in a range of 1500˚c to 1600˚c inclusive for vitrification. Then, the resultant glass melting liquid is formed into a tube by using the tube drawing method such as a Danner method and the like. After that, the tube is cut into the predetermined size and heat-processed to obtain a glass tube. By using the glass tube, it is possible to manufacture various types of lamps in the usual manner.

Here, the outer and inner diameters and the total length of the glass bulb 2 are not limited to the above. However, since the glass bulb 2 for the cold cathode fluorescent lamp 1 is desired to have the small tube diameter and thin wall thickness, the preferable outer diameter of the glass bulb 2 is in the range of 1.8 mm to 6.0 mm inclusive, and the preferable inner diameter of that is in the range of 1.4 mm to 5.0 mm inclusive.

The glass bulb 2 is sealed airtight at each end by a piece of a bead glass 3. In a vicinity of each end of the glass bulb 2, a lead wire 4 made of tungsten or kovar alloy and having an approximately 0.8 mm diameter is sealed airtight, so as to pass through the bead glass 3. Furthermore, a cap-shaped electrode 5 is attached to each lead wire 4 at the end disposed within the glass bulb 2. Here, the electrode 5 is made from nickel or niobium and its surface is coated with an electron radioactive material. Note that the pieces of the bead glass 3, the lead wire 4 and the electrode 5 are not limited to the above structure.

A rare earth phosphor 6 formed from a mixture of red, green, and blue phosphors ($Y_2O_3$: Eu, $LaO_4$: Ce, Tb, $BaMg_2Al_{16}O_{27}$: Eu, Mn) are applied to the inner surface of the glass bulb 2. Also, mercury in a range of 0.8 mg to 2.5 mg inclusive (not illustrated) and a rare gas such as xenon and the like (not illustrated) are enclosed within the glass bulb 2. Up to now, although the cold cathode fluorescent lamp of the present invention is described specifically with reference to the embodiment, the content of the present invention is not limited to the above embodiment.

(Description of backlight unit)

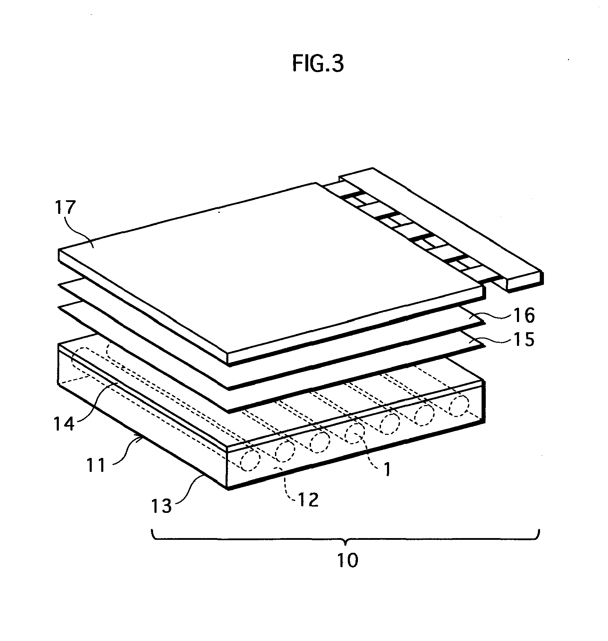

FIG. 3 is the schematic view showing the essential structure of a direct-type backlight unit of one embodiment of the present invention. The structure of a direct-type backlight unit 10 of the embodiment of the present invention basically corresponds to that of a conventional backlight unit.

An enclosure 11 made from a white PET (polyethylene terephthalate) resin is formed from a substantially rectangular reflection plate 12 and a plurality of side plates 13 disposed so as to surround the reflection plate 12. A plurality of evenly spaced cold cathode fluorescent lamps 1 are housed in a horizontal lighting direction within the enclosure 11, so as to be close to the reflection plate 12.

The diffusion plate 14 made from a PC resin is disposed in the enclosure 11, so as to be in opposition to the reflection plate 12 with the cold cathode fluorescent lamps 1 therebetween. In the backlight unit 10, the side on which the diffusion plate 14 is disposed relative to the cold cathode fluorescent lamps 1 is the light-emission side of the backlight unit 10, while the side on which the reflection plate 12 is disposed relative to the cold cathode fluorescent lamps 1 is the light-reflecting side of the backlight unit 10. The diffusion sheet 15 made from the PC resin and a lens sheet 16 made from the acrylic resin are disposed on the light-emission side of the diffusion plate 14 so as to overlap one another.

With a liquid crystal display TV that employs the backlight unit 10, a liquid crystal display panel 17 of the liquid crystal display TV is disposed on the light-emission side of the lens sheet 16.

Note that the backlight unit 10 is not limited to the above structure. Consider a typical configuration in which the backlight unit 10 is used in a 32-inch liquid crystal display TV, for example. In this case, the measurements of the enclosure 11 are set to a width of approximately 408 mm, a length of approximately 728 mm, and a depth of approximately 19 mm. Also, sixteen cold cathode fluorescent lamps 1 are disposed in the enclosure 11 at equally spaced intervals of approximately 25.7 mm. Also, the total length of the cold cathode fluorescent lamp 1 is approximately 730 mm and the outer and inner diameters of the glass bulb 2 are set to approximately 4.0 mm and approximately 3.4 mm respectively. When such backlight unit 10 is operated at a 5. 5 mA lamp power, a surface luminance of approximately 8000 $cd/m^2$ is obtained with the lens sheet 16.

(Description of experiment)

Through experiment, the inventors investigated an additive amount of $MoO_3$ and an additive amount of an oxidant which are required for obtaining a glass composition having a high ultraviolet shielding effect, a high anti-solarization effect, and less coloring.

In the experiment, the glass of each constituent shown in FIG.1 was manufactured to evaluate glass characteristics. Each glass was manufactured by taking the following steps. Respective glass materials were mixed to have the same constituents as shown in FIG. 1, and put in a platinum crucible. The mixture was heat-melted in an electric furnace at a temperature of 1500°C for 3 hours. Then, the resultant mixture was sufficiently clarified and poured onto a carbon mold to form in a plate shape or board shape, and cooled in the electric furnace.

As for an ultraviolet transmittance, a glass sample was manufactured by polishing both sides of a plate-shaped glass having a diameter of 20 mm and a thickness of 2 mm so as to be mirror surfaces. Then, a transmittance of a 254 nm ultraviolet ray of the glass sample ($T_{254}$), and a transmittance of a 313 nm ultraviolet ray of the glass sample ($T_{313}$) were measured by a spectrophotometer. Note that the ultraviolet transmittance means a transmittance at a plate thickness of 2 mm.

The ultraviolet shielding effect was evaluated based on $T_{254}$ and $T_{313}$. More specifically, when $T_{254}$ was less than 1.0% and $T_{313}$ was less than 5.0%, the ultraviolet shielding effect was judged to be "◎". When $T_{254}$ was less than 1.0% and $T_{313}$ was equal to or more than 5.0%, the ultraviolet shielding effect was judged to be "○". On the other hand, when $T_{254}$ was equal to or more than 1.0%, the ultraviolet shielding effect was judged to be "×". When the judgment was "○" and "◎", the ultraviolet shielding effect was evaluated to be high.

As for the visible light transmittance, a glass sample was manufactured by polishing both sides of a plate-shaped glass having a diameter of 20 mm and a thickness of 2 mm so as to be mirror surfaces. Then, a transmittance of 400 nm visible light of the glass sample ($T_{400}$), and a transmittance of 550 nm visible light of the glass sample ($T_{550}$)

were measured by a spectrophotometer. Note that the visible light transmittance means a transmittance at a plate thickness of 2 mm.

Coloring was evaluated based on $T_{400}$ and $T_{550}$. More specifically, when both $T_{400}$ and $T_{550}$ were equal to or more than 85% and a ratio $T_{400}/T_{550}$ was equal to or more than 0.95, the coloring was judged to be "◎". When at least one of $T_{400}$ and $T_{550}$ was equal to or more than 80% and less than 85%, and the ratio $T_{400}/T_{550}$ was equal to or more than 0.95, the coloring was judged to be "○". On the other hand, when at least one of $T_{400}$ and $T_{550}$ was less than 80%, or when the ratio $T_{400}/T_{550}$ was less than 0.95, the coloring was judged to be "×". When the judgment was "○" and "◎", it was evaluated that there was no coloring.

The coefficient of thermal expansion ($\alpha_{30/380}$) in a range of 30˚C to 380˚C inclusive was calculated by manufacturing a cylindrical glass sample whose diameter and length were 5.0 mm and 12 mm respectively, and measuring a difference between the coefficient of thermal expansion of the cylindrical glass sample and the coefficient of thermal expansion of a standard quartz glass sample whose coefficient of thermal expansion was evaluated.

As for the evaluation of the glass devitrification, a glass sample which was crushed so as to have a particle diameter of about 2 mm was put in a temperature gradient furnace which was set to be in a range of 500˚C to 1000˚C inclusive, and the glass sample was taken out from the temperature gradient furnace after being left for four hours to observe a crystal. When a temperature range in which the crystal was precipitated was in a range of 700˚C to 800˚C inclusive, the glass devitrification was judged to be "○". When the temperature range was lower than 700˚C or higher than 800˚C, the glass devitrification was judged to be "×".

Each of conventional examples 1 and 2 is glass having the same composition as the conventional glass, and has the ultraviolet shielding effect. However, the devitrification is high because the glass contains $TiO_2$, thereby the glass is not suitable for a lamp.

Each of embodiments 1 to 5 is the glass of the present invention. Regarding the glass of each of the embodiments 1 to 5, the content of $MoO_3$ satisfies the constituents of the glass composition of the present invention, the ultraviolet shielding effect is high, and coloring is less likely to occur. Above all, the glass of each of the embodiments 3 to 5 sufficiently shields even a 313 nm ultraviolet ray. Therefore, the glass is suitable for a lamp for a backlight of a display device such as a liquid crystal display device.

Note that regarding the glass of each of the embodiments 2 and 3, an additive amount of an oxidant is less than 0.5 times as large as $MoO_3$, which is insufficient. As a result, the visible light transmittance is lower compared with the glass of each of the embodiments 1, 4, and 5.

As for the glass of a comparative example 1, since the content of $MoO_3$ is too low, a transmittance of a 254 nm ultraviolet ray is high. Therefore, the ultraviolet shielding effect is insufficient, thereby the glass is not suitable for a lamp.

As for the glass of comparative example 2, since the content of $MoO_3$ is too high, a transmittance of visible light is low. Therefore, the glass is colored and is not suitable for a lamp.

## **Industrial Applicability**

The glass composition for lamps of the present invention can be used in the wide range of all types of lamps. The glass composition for lamps of the present invention is particularly suitable for a cold cathode fluorescent lamp and the like of a backlight for a liquid crystal display device that requires high-quality displays, such as liquid crystal display TVs, displays for PCs, liquid crystal panels for cars and the like.

**Claims**

1. A glass composition for lamps which contains Mo ions as a component, substantially comprising the following that are expressed in terms of oxides:

   $SiO_2$: 55 to 75 wt%;
   $B_2O_3$: 11 to 25 wt%;
   $MoO_3$: 0.3 to 1.4 wt%;
   $Al_2O_3$: 1 to 10 wt%;
   $Li_2O$: 0 to 10 wt%;
   $Na_2O$: 0 to 10 wt%;
   $K_2O$: 0 to 10 wt%;
   $Li_2O + Na_2O + K_2O$: 1 to 10 wt%;
   $MgO$: 0 to 5 wt%;
   $CaO$: 0 to 10 wt%;
   $SrO$: 0 to 10 wt%;

BaO: 0 to 10 wt%; and
MgO + CaO + SrO + BaO:1 to 10 wt%, wherein

a cation percentage of $Mo^{6+}$ and $Mo^{Other}$ of the Mo ions satisfies the following relation:

$$(Mo^{6+})/[(Mo^{6+}) + (Mo^{Other})] \geq 0.8.$$

**2.** The glass composition of Claim 1, having an oxidization property in a molten state.

**3.** The glass composition of Claim 1, containing 1.1 wt% or more $MoO_3$ in terms of oxides.

**4.** The glass composition of Claim 2, containing 1.1 wt% or more $MoO_3$ in terms of oxides.

**5.** The glass composition of Claim 1, wherein
a thermal expansion coefficient $\alpha_{30/380}$ is in a range of $34 \times 10^{-7}/K$ to $43 \times 10^{-7}/K$ inclusive.

**6.** The glass composition of Claim 4, wherein
a thermal expansion coefficient $\alpha_{30/380}$ is in a range of $34 \times 10^{-7}/K$ to $43 \times 10^{-7}/K$ inclusive.

**7.** The glass composition of Claim 1, wherein
a thermal expansion coefficient $\alpha_{30/380}$ is in a range of $43 \times 10^{-7}/K$ to $55 \times 10^{-7}/K$ inclusive.

**8.** The glass composition of Claim 4, wherein
a thermal expansion coefficient $\alpha_{30/380}$ is in a range of $43 \times 10^{-7}/K$ to $55 \times 10^{-7}/K$ inclusive.

**9.** A lamp including a glass bulb that is made of the glass composition of Claim 1.

**10.** A lamp including a glass bulb that is made of the glass composition of Claim 3.

**11.** A backlight unit on which the lamp of Claim 9 is disposed.

**12.** A backlight unit comprising:

a plurality of lamps of Claim 10; and
a diffusion plate made from a polycarbonate resin disposed on a light-emission side of the plurality of lamps.

**13.** A method for producing a glass composition for lamps comprising:

a mixing step of mixing glass materials so that the glass composition substantially contains the following that are expressed in terms of oxides:

$SiO_2$: 55 to 75 wt%;
$B_2O_3$: 11 to 25 wt%;
$MoO_3$: 0.3 to 1.4 wt%;
$Al_2O_3$: 1 to 10 wt%;
$Li_2O$: 0 to 10 wt%;
$Na_2O$: 0 to 10 wt%;
$K_2O$: 0 to 10 wt%;
$Li_2O + Na_2O + K_2O$: 1 to 10 wt%;
MgO: 0 to 5 wt%;
CaO: 0 to 10 wt%;
SrO: 0 to 10 wt%;
BaO:0 to 10 wt%; and
MgO + CaO + SrO + BaO: 1 to 10 wt%; and

a melting step of melting the mixed glass materials to make the glass composition in a molten state, wherein

the glass materials in the molten state are oxidized in the melting step.

14. The method of Claim 13, wherein
    a part of the glass materials mixed in the mixing step is alkali metal nitrate, and
    the glass materials in the molten state are oxidized in the melting step by melting the alkali metal nitrate.

15. The method of Claim 13, wherein
    the alkali metal nitrate is either $NaNO_3$ or $KNO_3$, or both $NaNO_3$ and $KNO_3$.

16. The method of Claim 14, wherein
    the alkali metal nitrate is either $NaNO_3$ or $KNO_3$, or both $NaNO_3$ and $KNO_3$.

## FIG.1

| OXIDE WT% | CONVENTIONAL EXAMPLE | | COMPARATIVE EXAMPLE | | EMBODIMENT | | | | |
|---|---|---|---|---|---|---|---|---|---|
| | No.1 | No.2 | No.1 | No.2 | No.1 | No.2 | No.3 | No.4 | No.5 |
| $SiO_2$ | 69.3 | 71.3 | 70.2 | 68.5 | 68.8 | 70.0 | 70.4 | 70.8 | 69.6 |
| $B_2O_3$ | 15.5 | 15.3 | 16.0 | 15.3 | 17.2 | 15.4 | 15.5 | 15.8 | 15.6 |
| $Al_2O_3$ | 5.1 | 1.4 | 4.8 | 5.1 | 3.1 | 6.7 | 5.2 | 5.2 | 5.1 |
| $Li_2O$ | 0.5 | | | | | | 0.5 | | |
| $Na_2O$ | 1.4 | 3.8 | 5.6 | 4.5 | 6.2 | 5.6 | 4.0 | 5.6 | 5.5 |
| $K_2O$ | 4.8 | 1.7 | 0.8 | 1.5 | | | 1.5 | | |
| $MgO$ | 0.5 | 0.5 | | 0.8 | | | 1.0 | 1.5 | 0.2 |
| $CaO$ | 0.9 | 0.9 | 1.8 | | 4.4 | 2.0 | 0.8 | | 0.9 |
| $SrO$ | | | 0.6 | | | | | | 1.6 |
| $BaO$ | 1.2 | | | 2.4 | | | | | |
| $Sb_2O_3$ | 0.1 | | | | | | | | |
| $As_2O_3$ | | 0.1 | | | | | | | |
| $TiO_2$ | 0.6 | 5.0 | | | | | | | |
| $ZrO$ | 0.1 | | | 0.1 | | | | | 0.1 |
| $MoO_3$ | | | 0.2 | 1.8 | 0.3 | 0.3 | 1.1 | 1.1 | 1.4 |
| $ZnO$ | | | | | | | | | |
| OXIDANT | — | — | 0.1 | 1.1 | 1.0 | 0.1 | 0.3 | 5.6 | 0.7 |
| $MoO_3$/OXIDANT | — | — | 0.50 | 0.61 | 3.33 | 0.33 | 0.27 | 5.09 | 0.50 |
| ULTRAVIOLET TRANSMITTANCE | | | | | | | | | |
| 254nm:$T_{254}$ | 0.4% | 0.2% | 13.8% | 0.1% | 0.1% | 0.1% | 0.1% | 0.1% | 0.1% |
| 313nm:$T_{313}$ | 38.0% | 1.0% | 85.4% | 1.1% | 51.5% | 36.9% | 3.1% | 4.3% | 2.4% |
| ULTRAVIOLET SHIELDING | ○ | ◎ | × | ◎ | ○ | ○ | ◎ | ◎ | ◎ |
| VISIBLE LIGHT TRANSMITTANCE | | | | | | | | | |
| 400nm:$T_{400}$ | 88.8% | 79.9% | 92.1% | 74.1% | 90.9% | 82.1% | 80.2% | 89.9% | 87.4% |
| 550nm:$T_{550}$ | 91.5% | 90.8% | 93.2% | 89.1% | 91.3% | 89.3% | 87.8% | 92.4% | 90.4% |
| $T_{400}/T_{550}$ | 0.97 | 0.88 | 0.99 | 0.83 | 1.00 | 0.92 | 0.91 | 0.97 | 0.97 |
| COLORING | ◎ | × | ◎ | × | ◎ | ○ | ○ | ◎ | ◎ |
| THERMAL EXPANSION COEFFICIENT $\alpha_{30-380}(\times 10^{-7})$ | — | — | 42 | 43 | 37 | 42 | 46 | 40 | 42 |
| DEVITRIFICATION | × | × | ○ | ○ | ○ | ○ | ○ | ○ | ○ |

FIG.2

# FIG.3

EP 1 870 385 A1

<table>
<tr><td colspan="2" align="center">**INTERNATIONAL SEARCH REPORT**</td><td>International application No.</td></tr>
<tr><td colspan="2"></td><td>PCT/JP2006/306253</td></tr>
</table>

A. CLASSIFICATION OF SUBJECT MATTER
*C03C4/08*(2006.01), *C03C3/091*(2006.01), *H01J61/30*(2006.01)

According to International Patent Classification (IPC) or to both national classification and IPC

B. FIELDS SEARCHED

Minimum documentation searched (classification system followed by classification symbols)
C03C4/08, C03C3/091, H01J61/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
INTERGLAD Ver.6

C. DOCUMENTS CONSIDERED TO BE RELEVANT

| Category* | Citation of document, with indication, where appropriate, of the relevant passages | Relevant to claim No. |
|---|---|---|
| Y | WO 03/097544 A1 (SCHOTT GLAS),<br>27 November, 2003 (27.11.03),<br>Claims 1, 8; page 3, lines 15 to 25;<br>page 4, lines 26 to 34; page 5, lines 3 to 4;<br>page 8, lines 13 to 18<br>& US 2005/0151116 A1    & JP 2005-529048 A<br>Claims 1, 8; Par. Nos. [0019], [0028], [0032],<br>[0041] | 1-16 |
| Y | JP 2004-91308 A (Nippon Electric Glass<br>Co., Ltd.),<br>25 March, 2004 (25.03.04),<br>Par. Nos. [0001], [0094]<br>(Family: none) | 1-16 |

☒ Further documents are listed in the continuation of Box C.　　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 April, 2006 (21.04.06) | 02 May, 2006 (02.05.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/306253 |

C (Continuation).　DOCUMENTS CONSIDERED TO BE RELEVANT

| Category* | Citation of document, with indication, where appropriate, of the relevant passages | Relevant to claim No. |
| --- | --- | --- |
| Y | JP 8-55607 A　(Ushio Inc.),<br>27 February, 1996 (27.02.96),<br>Par. Nos. [0002], [0013]; Fig. 4<br>(Family: none) | 12 |
| A | JP 2001-220175 A　(Nippon Electric Glass<br>Co., Ltd.),<br>14 August, 2001 (14.08.01),<br>Claim 1<br>& WO 01/40128 A1　　　　& US 6635592 B1<br>& EP 1178020 A1 | 1-16 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0977529 B
- JP 2001220175 A
- JP 2002060240 A